# EUROPEAN PATENT APPLICATION

(11) **EP 3 657 814 A1**
(43) Date of publication of application: **27.05.2020**
(21) Application number: 18207890.7
(22) Date of filing: 22.11.2018
(51) Int. Cl.: H04N 21/658, H04N 21/431, H04N 21/266, H04N 21/218

(54) **SYSTEM FOR DATA STREAMING IN A NETWORK OF DATA SOURCES AND USER INTERFACES**

(71) Applicant: Siemens Aktiengesellschaft, 80333 München (DE)
(72) Inventor: Bartsch, Ernst, 90489 Nürnberg (DE); Fries, Edgar, 91077 Neunkirchen am Brand (DE); Hutter, Andreas, 81673 München (DE); MacWilliams, Asa, 82256 Fürstenfeldbruck (DE); Newman, Joseph, 82008 Unterhaching (DE); Ziehe, Bernd, 65835 Liederbach (DE)

(57) **Abstract**

The present invention relates to a method and system for data streaming in a network between one or more data sources and one or more user interfaces, i.e. client devices, and at least one computing platform, i.e. a server, acting as a mediator. The multiple video data streams are integrated by the server into one video signal following the rules established for the layout. The layout comprises multiple fields, said fields containing video data and/or data related to the video. The client devices can react to the video signal by sending requests to the server so that the layout of the video signal can be adapted. The server processes such requests and transmits control signals to the data sources so that the operation modus of the video data sources can be changed.

## Description

The present invention generally relates to a method and system for data streaming in a network between one or more data sources and one or more user interfaces and at least one computing platform.

A remote system such as an industrial system or a situation such as a soccer game can be observed from different perspectives by using several cameras or by changing the viewing angle of a camera on a visual display. In a typical broadcast environment, the viewing angle is determined by the owner of the camera system. However, user often wish to view a situation from a different viewing angle or perspective. This is of interest in sports as by changing the viewing angle a specific situation can be interpreted differently, or in the context of a factory for the controlling of machines by remote services.

An example is an acceptance test for a production line in a remote factory for a customer organization. Several representatives of the customer organization would like to remotely observe the production line at the factory site of a producer. They can view different simultaneous camera image streams placed at different locations for obtaining a complete picture of the situation in the factory or in the field of medicine for computer-aided surgery or diagnostic analysis.

Another example is a remote outage service for a plant. A set of remote experts are guiding workers at the plant site through a process of analyzing the problems and finding a solution to run the plant again in the case of an outage. They are observing video camera streams and calculated graphs of operational parameters.

A further example is an artistic performance. A large audience is watching a live concert or a theatre play that is being recorded by different cameras simultaneously and supplemented with additional information panels, such as showing the lyrics or musical score.

Sports events are another example. A large audience is watching a live sports event that is being recorded by different cameras simultaneously and supplemented with additional information panels.

A further application is computer-aided surgery in order to obtain the best view of the operating area and to combine this simultaneously with information about the patient, his/her diagnostic health data and microscopic and/or radio-logic images. In case that several surgeons are involved each surgeon can obtain the specific information he/she needs for his/her tasks.

Today, different approaches are available for transmitting and presenting a video stream and other information to multiple users, while users can also control certain aspects of the form of presentation.

One approach is closed-circuit television (CCTV) with multiple raw video channels. All available camera streams are sent via a network to the users, for example using a cable carrying multiple frequency-multiplexed signals. Each user can tune his/her monitor to the camera stream of his/her choice. However, this solution needs a lot of data transfer as all available camera streams are sent to the user.

Another approach is broadcast television with multiple (mixed) video channels. In soccer, for example, one main-channel may show a wide-angle view of the stadium, and another channel shows close-ups of the players at the ball. The individual channels are mixed at the broadcaster's site, and each viewer can switch his television sets, smartphones or other viewing devices to the individual channels of his/her choice.

Furthermore, mixed video with hotspots as an image map are known. At YouTube™, for example, an author records a video and then later inserts clickable image maps that may inform about different URLs such as a link to another video, a subscription to a channel, or an offer to buy a product. A viewer using a web browser can then click on these defined areas in the video, and his/her browser will then display the other video or another web page.

Another approach are remote desktop solutions. A complex factory-monitoring system shows multiple windows with different graphs and camera streams on a personal computer (PC) which is on the factory site. A viewer may connect to his/her PC by using a remote desktop client so that he/she can exactly watch what is displayed on that PC. He/she can re-arrange the windows and control different aspects of the monitoring system using his/her mouse and keyboard. The mouse and keyboard events are sent back to the PC at the factory as raw mouse coordinates.
It is also possible to view simultaneously multiple video streams on a PC by a user. A user can open and arrange several windows on his/her desktop PC showing different live streams and/or different remote desktop connections to several PCs so that he/she obtains an overall picture of a remote location. This approach is often used in so-called situation rooms or command-and-control centers. However, this approach is quite complex and needs high amounts of data transfer as all the data streams are transmitted concurrently.

In view of the foregoing it is thus an object of the present invention to provide techniques that assist in improving the flexibility of video presentations on user interfaces and local devices to allow a dynamic adaption to specific user requirements.

According to a first aspect, the invention provides a method for data streaming in a network between one or more data sources and one or more user interfaces and at least one computing platform, comprising the steps of:
- receiving data streams from data sources by a receiving module of the computing platform;
- composing the data streams from the multiple data sources into at least one layout by a composing module of the computing platform;
- integrating the data streams from the multiple data sources by an integration and compression module of the computing platform into at least one video signal following defined rules of the layout;
- compressing the video signal by the integration and compression module;
- sending the video signal by a transmitting module of the computing platform to the one or more user interfaces for displaying the video signal;
- sending a request from at least one of the one or more user interfaces to a request module of the computing platform regarding the layout of the video signal;
- adapting the layout of the video signal by the composing module according to the request of the at least one user interface sent to the request module.

In an advantageous embodiment, the computing platform sends signals to the data sources to change specific features of the data streams.

In a further embodiment, the layout follows certain rules which are defined previously and/or interactively by the users of the user interfaces.

Preferably, the one or more user interfaces are configured as (or as part of) an image device and/or a mobile device and/or an automotive device and/or an analytical scientific instrument and/or a surgery instrument and/or a personal computer and/or a tablet.

In a further embodiment, the data are received from video cameras and/or databases and/or vibration sensors and/or acoustical sensors and/or optical sensors and/or temperature sensors and/or pressure sensors and/or chemical and/or piezoelectric sensors and/or biological sensors.

Preferably, the composing algorithm of the composing module is configured as an artificial neural network and/or a Support Vector Machine and/or is subdivided into sub-algorithms.
In a further preferred embodiment, the computing platform is a server and/or a cloud computing platform.

Furthermore, the multiple user interfaces and/or the data sources are connected in the network.

According to a second aspect, the invention provides a system for data streaming in a network between one or more data sources and one or more user interfaces and at least one computing platform, wherein the system comprises the computing platform and the computing platform comprises: a receiving module configured to receive data streams from the data sources; a composing module configured to compose the data streams from the multiple data sources into at least one layout; an integration and compression module configured to integrate the data streams from the multiple data sources into at least one video signal following the rules of the layout and to compress the video signal; a transmitting module configured to send the video signal to the one or more user interfaces for displaying the video signal; a request module configured to receive signals sent from at least one of the one or more user interfaces regarding the layout of the video signal; and wherein the composing module is configured to adapt the layout of the video signal according to the request of the at least one user interface sent to the request module.

In a preferred embodiment, the computing platform is configured to send signals to the data sources to change specific features of the data streams.

In a further embodiment, the layout follows certain rules which can be defined previously and/or interactively by the users of the user interfaces.
Preferably, at least one of the one or more user interfaces is configured as an image device and/or a mobile device and/or an automotive device and/or an analytical scientific instrument and/or a surgery instrument and/or a personal computer and/or a tablet.

In a further embodiment, the composing algorithm of the composing module is configured as an artificial neural network and/or a Support Vector Machine and/or is subdivided into sub-algorithms.

According to a third aspect, the invention provides a cloud computing platform configured to perform the method according to the first aspect.

According to a fourth aspect, the invention provides a computer readable data storage medium comprising executable program code configured to, when executed, perform the method according to the first aspect.

Additional features, aspects and advantages of the invention or of its embodiments will become apparent on reading the detailed description in conjunction with the following figures:
- Fig. 1: provides a general overview of a system according to an embodiment of the second aspect of the invention;
- Fig. 2: shows an overview of a layout of a video presentation.
- Fig. 3: shows a schematic flow diagram illustrating a method according to an embodiment of the first aspect of the present invention;
- Fig. 4: schematically illustrates a computer readable data storage medium according to an embodiment of the fourth aspect of the invention.

In the following description, for purposes of explanation and not limitation, specific details are set forth in order to provide a thorough understanding of the present invention. It will be apparent to one skilled in the art that the present invention may be practiced in other implementations that depart from these specific details.

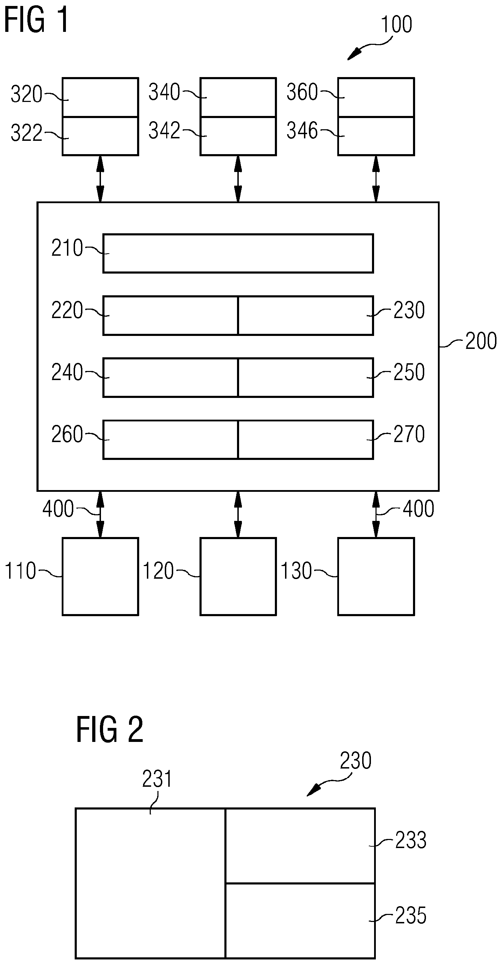

Fig. 1 provides a general overview of a system 100 for video data streaming on multiple local user interfaces 110, 120, 130. A data receiving module 210 of a computing platform realized by a server 200 receives data and video data streams 322, 342, 364, ..., N from several video data sources 320, 340, 360, ... , N such as cameras or live graph feeds. The server 200 comprises a composing module 220 which composes the data streams 322, 342, 364 from these multiple data sources 320, 340, 360 into one video layout 230. The video layout 230 is designed according to defined rules which can be adapted to several use cases and domains.

As illustrated in Fig. 2, the video layout 230 shown on a display of any of the user interfaces 110, 120, 130 can be divided into three (or more) fields 231, 233, 235. Each field 231, 233, 235 displays at least one video stream 322, 342, 364 from the respective data source 320, 340, 360. However, additional information from a further database can be displayed in one of the fields 231, 233, 235 of the video layout 230. For a soccer game, as an example, in the field 231 a video stream 322 from the data source 320 presenting close-up of player(s) at the ball is shown, in the field 233 a video stream 342 from a data source 340 presenting a wide-angle view of the stadium is shown and in the field 235 a video stream 362 from a data source 360 presenting a table with statistics is shown. However, in other embodiments the number of fields and/or the content can be adapted to the specific requirements of the respective application/domain.

In a video integration and compression module 240 of the server 200 the video data streams 322, 342, 362 from the multiple video data sources 320, 340, 360 are integrated into one video signal 250 following the rules of the video layout 230. Furthermore, the video signal 250 can be compressed by the video integration and compression module 240.

The multiple user interfaces 110, 120, 130 are connected to the server 200 and a transmitting module 260 of the server transmits the video signal 250 to the multiple user interfaces 110, 120, 130.

The multiple user interfaces 110, 120, 130 can react to the video signal 250 by sending a request to a request module 270 of the server 200 so that the layout 230 of the video signal 250 can be adapted. Therefore, the server 200 allows the users to interact with the individual video streams 322, 342, 346 of the video signal 250 for changing the rules of the layout 230 for generating the video signal 250.

The multiple user interfaces 110, 120, 130 are connected to the server 200 using a network communication and streaming protocol 400. The network communication protocol 400 between the server 200 and the user interfaces 110, 120, 130 is preferably determined by the following rules:
The server 200 sends to all user interfaces 110, 120, 130 the combined and compressed video signal 250 and a description of the current rules of the layout 230 and modes of presentation. The modes of the layout 230 describe the way how a video signal 250 is presented. For example, a text message such as SLOWMOTION for the field 231, or FULLSCREEN for the field 233, or PREVIOUS or NEXT for the field 235 can be displayed in the fields. When a user clicks/touches on such a text message (or an icon or other symbols representing a message), the user interface 120, 140, 160 sends this information to the request module 270 of the server 200.

The server 200 processes this information and transmits a signal to the video data sources 320, 340, 360 so that the operation modus of the video data sources 320, 340, 360 can be changed. For example, the video data stream 322 can be transferred to a slow motion modus or a camera as a data source 340 can be moved for changing the viewing angle. It is also possible, that the rules for the video layout 230 are changed. For example, in case of clicking/touching on the text message FULLSCREEN the entire display of a user interface 110, 120, 130 is used for the presentation of one video stream 322 of the video signal 250.

The server 200 can be configured as a cloud computing platform. The local user interfaces 110, 120, 130 can be part of an industrial plant. Additional local interfaces can be added to the system 100. Examples of local interfaces 110, 120, 130 are smart phones, display devices, or television screens. Other examples are medical devices in a healthcare environment comprising a display with a keyboard or a display configured as a touch screen or navigation systems in the automotive area.
The interfaces 110, 120, 130 may comprise respectively an IIoT agent and can be connected to an IIoT gateway (not shown), which in turn is connected by a network to the server 200 configured as an IIoT cloud computing platform. The network may include one or more wide area networks (WAN), such as Internet, local area networks (LAN), or other networks that may facilitate data communication.

A composing algorithm (A) of the composing module 220 can be configured as an artificial neural network and/or Support Vector Machines and/or subdivided into sub-algorithms (SA1, SA2,... SAn).

Variously disclosed embodiments include data processing systems and methods that may be used to facilitate the composing protocol and network communication protocol 400. In one example, the system 100 may comprise at least one processor configured via executable instructions included in at least one memory to initiate a plurality of composing, integration and communication tasks that are respectively executed by different processing resources. The composing, integration and communication tasks respectively manage respective subsets of composing and/or integration and/or communication protocols assigned to respective different local interfaces 110, 120, 130 and data sources 320, 340, 360 for generating the requested video signal 250. This also includes a determination if a communication between the server 100 and a local interface 110, 120, 130 and/or a data source 320, 340, 360 shall be performed in view of security aspects.

Furthermore, the server 100 and the local interfaces 110, 120, 130 and the data sources 320, 340 may all be integrated in a network which allows access to all the other components connected to the network. The network may include an encryption scheme that may be employed over the public Internet. The network can be configured in a wired and/or wireless configuration that supports data transfer.

The displayed representation is intended to illustrate one possible configuration of the system 100. Other configurations can include fewer components, and in other configurations additional modules may be utilized. These changes in configurations and components can increase or alter the capabilities of the system 100. Especially in the field of medical imaging devices for capturing high-resolution medical images of a patient such as magnetic resonance imaging (MRI) machines, computer tomography, x-ray, positron emission tomography, scanning microscopy, ultrasound imaging systems the data sources 320, 340, 360 sensors may be configured as sensors to capture image data such as charged-coupled devices (CCD). Further, other types of sensors such as acoustical, optical, piezoelectric, pressure, temperature, chemical sensors can be used to collect additional data for a specific local interface 110, 120, 130.

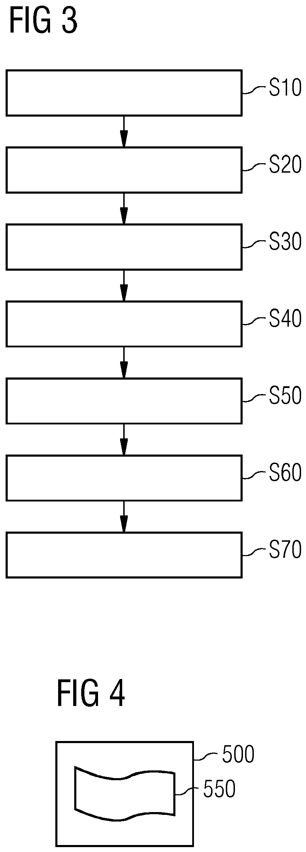

Fig. 3 shows a schematic flow diagram illustrating a method according to an embodiment of the second aspect of the present invention. The method of Fig. 3 will be described partially using reference signs of Fig. 1, although the method of Fig. 3 is not restricted to the embodiments described in Fig. 1. On the other hand, the method of Fig. 3 may be executed using any of the embodiments described with respect to Fig. 1 and may, accordingly, be adapted and modified according to any variations and modifications described in the foregoing.

In a step S10, the receiving module 210 of the server 200 receives data streams 322, 342, 362, ... , N from data sources 320, 340, 360, ... , N.

In a step S20, the composing module 220 composes the data streams 322, 342, 362 from the multiple data sources 320, 340, 360 into one layout 230. The layout 230 follows certain rules which can be defined previously or interactively by the users of the user interfaces 110, 120, 130.

In a step 30, the data streams 322, 342, 362 from the multiple data sources 320, 340, 360 are integrated by the integration and compression module 240 into one signal 250 following the rules of the layout 230.

In a step S40, the video signal 250 is compressed by the integration and compression module 240.

In a step S50, the video signal 250 is send by the transmitting module 260 to the user interfaces 110, 120, 130 for displaying the video signal 250.

In a step S60, the user interfaces 110, 120, 130 send a request signal to the request module 270 of the server 200 regarding the layout 230 of the video signal 250.

In a step S70 the composing module 220 changes the layout 230 of the video signal 250 according to the request of the user interfaces sent to the request module 270. According to the adaption of the layout 230 the server 200 can send signals to the video data sources 320, 340, 360 to change specific features of the video data streams 322, 342, 362.

By the present invention each user can design his/her specific layout 230 for a video signal 250 whereas it is not necessary to send multiple video data signals 250 via a communication network which lead to high amounts of data transmission. Furthermore, a remote control capability of the user interface is not required.

According to the present invention a composing module 220 is used which can dynamically and efficiently compose video signals 250 in the same way as a TV broadcasting studio would undertake this task, but at the same time the actual layout 230 of the video signal 250 can be remotely controlled by users of the user interfaces 110, 120, 130.

Multiple simultaneous users can observe one situation or one entity over a wide area network, but the system 100 is adapted to process interactively user requests. The outcome is a real-time interaction with the users and a specific situation/entity resulting in a dynamic adaption of the layout 230 of the video signal 250.

Different user groups using different bandwidths and screen formats can obtain different layouts adapted to their specific requirements, for example one layout adapted for smartphones and one for PCs. However, the system 100 remains scalable as the adaption is a choice of predefined formats of the video signal 250 composed by the composing module 220.

Furthermore, the system 100 may support voting options. For example, different users can vote for their favorite player in a sports contest, and a camera as a data source module 340 is tracking this player which is shown in one field 231, 233, 235 of the display of the respective user interface(s) 110.

Fig. 4 schematically illustrates a computer readable data storage medium 500 comprising executable program code 550 configured to, when executed, perform the method according to the first aspect of the present invention, in particular as has been described with respect to Fig. 3.

## Claims

1. A method for data streaming in a network between one or more data sources (320, 340, 360, ..., N) and one or more user interfaces (110, 120, 130, ..., N) and at least one computing platform (200), comprising the steps of:
- receiving (S10) data streams (322, 342, 362, ... , N) from data sources (320, 340, 360, ... , N) by a receiving module (210) of the computing platform (200);
- composing (S20) the data streams (322, 342, 362) from the multiple data sources (320, 340, 360) into at least one layout (230) by a composing module (220) of the computing platform (200);
- integrating (S30) the data streams (322, 342, 362) from the multiple data sources (320, 340, 360) by an integration and compression module (240) of the computing platform (200) into at least one video signal (250) following defined rules of the layout (230);
- compressing (S40) the video signal (250) by the integration and compression module (240);
- sending (S50) the video signal (250) by a transmitting module (260) of the computing platform (200) to the one or more user interfaces (110, 120, 130) for displaying the video signal (250);
- sending (S60) a request from at least one of the one or more user interfaces (110, 120, 130) to a request module (270) of the computing platform (200) regarding the layout (230) of the video signal (250);
- adapting (S70) the layout (230) of the video signal (250) by the composing module (220) according to the request of the at least one user interface (110, 120, 130) sent to the request module (270).

2. The method according to claim 1, wherein the computing platform (200) sends signals to the data sources (320, 340, 360) to change specific features of the data streams (322, 342, 362).

3. The method according to claim 1 or claim 2, wherein the layout (230) follows certain rules which are defined previously and/or interactively by the users of the one or more user interfaces (110, 120, 130).

4. The method according of any one of claims 1 to 3, wherein the one or more user interfaces (110, 120, 130) are configured as an image device and/or a mobile device and/or an automotive device and/or an analytical scientific instrument and/or a surgery instrument and/or a personal computer and/or a tablet.

5. The method as claimed in any one of claims 1 to 4, wherein the data are received from video cameras and/or databases and/or vibration sensors and/or acoustical sensors and/or optical sensors and/or temperature sensors and/or pressure sensors and/or chemical and/or piezoelectric sensors and/or biological sensors.

6. The method as claimed in any one of claims 1 to 5, wherein the composing algorithm (A) of the composing module (220) is configured as an artificial neural network and/or a Support Vector Machine and/or subdivided into sub-algorithms (SA1, SA2,... SAn).

7. The method as claimed in any one of claim 1 to 6, wherein the computing platform (200) is a server and/or a cloud computing platform.

8. The method as claimed in any one of claims 1 to 7, wherein the one or more user interfaces (110, 120, 130) and/or the data sources (320, 340, 360) are connected in the network.

9. A system (100) for data streaming in a network between one or more data sources (320, 340, 360, ..., N) and one or more user interfaces (110, 120, 130) and at least one computing platform (200), wherein the computing platform (200) comprises: a receiving module (210) configured to receive data streams (322, 342, 362, ... , N) from the data sources (320, 340, 360, ... , N); a composing module (220) configured to compose the data streams (322, 342, 362) from the multiple data sources (320, 340, 360) into at least one layout (230); an integration and compression module (240) configured to integrate the data streams (322, 342, 362) from the multiple data sources (320, 340, 360) into at least one video signal (250) following the rules of the layout (230) and to compress the video signal (250); a transmitting module (260) configured to send the video signal (250) to the one or more user interfaces (110, 120, 130) for displaying the video signal (250; a request module (270) configured to receive signals sent from at least one of the one or more user interfaces (110, 120, 130) regarding the layout (230) of the video signal (250); and wherein the composing module (220) is configured to adapt the layout (230) of the video signal (250) according to the request of the at least one user interface (110, 120, 130) sent to the request module (270).

10. The system according to claim 9, wherein the computing platform (200) is configured to send signals to the data sources (320, 340, 360) to change specific features of the data streams (322, 342, 362).

11. The system (100) according to claim 9 or claim 10, wherein the layout (230) follows certain rules which can be defined previously and/or interactively by the users of the user interfaces (110, 120, 130).

12. The system (100) according of any one of claims 9 to 11, wherein at least one user interface (110, 120, 130) is configured as an image device and/or a mobile device and/or an automotive device and/or an analytical scientific instrument and/or a surgery instrument and/or a personal computer and/or a tablet.

13. The system (100) as claimed in any one of claims 9 to 12, wherein the composing algorithm (A) of the composing module (220) is configured as an artificial neural network and/or a Support Vector Machine and/or subdivided into sub-algorithms (SA1, SA2,... SAn).

14. A cloud computing platform (200) configured to perform the method as claimed in any one of claims 1 to 8.

15. A computer-readable data storage medium (500) comprising executable program code (550) configured to, when executed, perform the method according to claims 1 to 8.
